# EUROPEAN PATENT SPECIFICATION

(11) **EP 1 136 343 B1**
(45) Date of publication and mention of the grant of the patent: **23.11.2005**
(21) Application number: 01302375.9
(22) Date of filing: 14.03.2001
(51) Int. Cl.: B62D 7/14, B62D 15/02, B62D 7/15, B62D 13/04

(54) **Control apparatus and method for a steerable axle**
Einrichtung und Verfahren zur Regelung einer lenkbaren Achse
Dispositif et procédé de commande pour un essieu directeur

(30) Priority: 21.03.2000 GB 0006848
(43) Date of publication of application: 26.09.2001
(73) Proprietor: WEWELER NEDERLAND B.V., 7332 AP Apeldoorn (NL)
(72) Inventor: Davies, carlton John, Leyton, London E10 6EN (GB)
(74) Representative: Riemens, Roelof Harm

(56) References cited:
- EP-A- 0 786 394

## Description

The present invention relates to a control apparatus and method for a steerable axle.

In road vehicles generally, and in trucks in particular, there is usually a steering axle which is connected to a steering wheel via a steering column and steering box. The steering axle is generally at the front of the vehicle. Conventionally, a fixed axle, which is often driven but may be non-driven, is usually situated at the rear of the vehicle. In trucks in particular, one or more further axles may be provided so as to spread the weight of the vehicle over a greater number of contact points and to provide a larger area of contact with the road. There is a growing demand for one or more of the previously conventionally fixed axles to be steerable so as to minimise tyre wear and stresses caused during turning of the vehicle and to improve the turning circle of the vehicle, especially at low speed. It will be understood that a reference herein to a "steerable axle" means that wheels mounted on that axle are steerable.

Apparatus for controlling the amount of steer of an auxiliary steerable axle are known. In one system, a hydraulic ram is connected to the steering axle (at the front of the vehicle) so that the ram is displaced as the steering axle is displaced during steering. Hydraulic fluid is pumped from the hydraulic ram on the steering axle to a second hydraulic ram which is connected to the auxiliary steerable axle. Thus, as the steering axle is steered by the vehicle driver, the auxiliary steerable axle is also steered. The sizes of the various hydraulic rams and cylinders are set so that an appropriate amount of steer of the auxiliary steerable axle is obtained according to the amount of steer of the steering axle. However, this system has a drawback in that if the wheelbase is varied between trucks, it is necessary to change the size of the hydraulic rams and cylinders in order to obtain the correct amount of steer of the auxiliary steerable axle relative to the amount of steer of the steering axle. Furthermore, the mounting of a hydraulic ram on the steering axle makes the steering extremely heavy for the vehicle driver and can prevent the steering axle from naturally returning to the straight ahead condition if the steering wheel is released by the driver.

In another known system, cables are connected to the steering axle, the cables running down to a drive ram on the auxiliary steerable axle. The use of cables is inevitably troublesome in terms of manufacture, installation and maintenance of the vehicle as cable controls are often unreliable.

In addition, in both of the systems mentioned above, the auxiliary steerable axles must be positioned at the rear of the vehicle, behind the fixed axle, so that the auxiliary steerable axle or axles are trailing in order for the wheels on that axle to self-straighten. This precludes the use of an auxiliary steerable axle which is mid-mounted near to the fixed axle at the rear of the vehicle or in a so-called "Chinese six" in which the mid axle is positioned very close to the steering axle at the front of the vehicle. Furthermore, with the systems mentioned above, there is no way of disabling the steering feature of the auxiliary steerable axles, for example so as to lock the wheels in the straight ahead position if the vehicle is travelling above some predetermined speed.

In EP-A-0350809, there is disclosed a steering axle regulation system in which an auxiliary steerable axle is steered by a hydraulic cylinder. A steering error signal, being the difference between a desired steering angle and an actual steering angle of the auxiliary steerable axle, is sent to a microprocessor control unit to control the overall pressure of the hydraulic system. In the present applicant's WO-A-97/26170, the entire disclosure of which is incorporated herein by reference, there is disclosed a further example of a steering system for an auxiliary steerable axle which uses electronic sensors and transducers and a microprocessor for controlling the amount of steer of the steerable axle. However, it has been found that electronic systems are difficult to manufacture, install and operate sufficiently reliably for a reasonable cost.

In DE-A-2924196 there is disclosed another example of a hydraulic system for steering an auxiliary steerable axle. Movement of a manual steering wheel moves a piston rod which in turn causes high pressure to be applied to one side of a directional control valve and low pressure to be applied to the other side of the directional control valve. This pressure difference across the directional control valve causes the directional control valve to operate to turn on the supply of high pressure hydraulic fluid to one side of a servomotor and low pressure hydraulic fluid to the other side of the servomotor, which in turn causes the steerable wheels on the auxiliary steerable axle to steer. The movement of the steerable wheels is detected by pistons which act on the hydraulic fluid to remove the pressure difference across the directional control valve, thereby inhibiting further steer of the steerable wheels on the auxiliary steerable axle. It is said that "no losses occur in the [hydraulic] control circuit". However, in a practical embodiment of such a system, it has been found that losses do in fact occur in the control circuit and that such losses are so severe that the system cannot operate to steer the steerable wheels on a large auxiliary steerable axle of the type required for medium size or heavy trucks. Furthermore, the use of a directional control valve means that the supply of high pressure hydraulic fluid to the servomotor is either "on" at high pressure or "off", with no intermediate values being possible.

EP-A-0786394 discloses a power-assisted steering system for the steerable wheels of a rear axle of a vehicle in which the angle of the front wheels is transmitted hydraulically or mechanically to a proportional control valve. The steering system comprises a control apparatus according to the preamble of claim 1.

According to a first aspect of the present invention, there is provided control apparatus for a steerable axle, the control apparatus comprising: a transducer operable to provide a fluid pressure signal corresponding to movement of a steering actuator; a steering control connected to the transducer by a fluid pressure transmission line for causing a steerable axle to be steered in accordance with the fluid pressure signal received along the fluid pressure transmission line from the transducer; a detector for detecting steering movement of a said steerable axle and for causing the fluid pressure signal applied to the steering control to be removed when a desired amount of steer of a said steerable axle has been achieved; and, a fluid pressurising device for selectively applying pressure to fluid in the fluid pressure transmission line separately of operation of the transducer.

In the preferred embodiment, the transducer transmits a fluid pressure signal to the steering control which in turn causes steer of wheels mounted on a steerable axle to which the apparatus is connected. When the steerable axle has steered by the desired amount, the detector operates to remove the fluid pressure signal from the steering control, thereby preventing further steering of the steerable axle. The control apparatus can operate entirely hydraulically and there is no need for complicated electronics or cables. The fluid pressure signal can be applied as a pressure difference across the steering control. The steerable axle will typically be an auxiliary steerable axle, which is secondary to a main steering axle. The steerable axle may however comprise the main steering axle. Plural steerable axles on a vehicle can be steered using the control apparatus of the present invention. In use, the fluid pressurising device is operated whenever it is desired to steer a steerable axle and is operated to apply pressure to fluid in the fluid pressure transmission line just prior to or at the same time as attempting to steer the steerable axle. This increase of the fluid pressure by the fluid pressure device serves to take up any "sponginess" which might be in the line. This in turn ensures that the steering control can operate properly to effect movement of a said steerable axle. Without such a fluid pressurising device, it has been found that the sponginess in the fluid pressure transmission line prevents the steering control from operating properly and can therefore prevent the steerable axle from being steered at all. It is believed at present that the primary source of this sponginess in a specific example of the present invention arises because of springs in the valve that constitutes the steering control.

The apparatus preferably comprises a steering actuator which is operably connected to the transducer to obtain steering movement of a said steerable axle on operation of the steering actuator.

The detector is preferably connected to the fluid pressure transmission line.

The steering control preferably comprises a proportional control valve which is operable to receive a fluid pressure signal and apply a force to steer a said steerable axle corresponding to the magnitude of the fluid pressure signal. In this embodiment, if for example wheels on a said steerable axle become stuck against steering in mud or the like and the driver of the vehicle applies a greater force to the steering actuator, a greater fluid pressure signal is applied to the steering control proportional control valve which in turn causes a correspondingly greater force to be applied to steer the said steerable axle. Thus, the greater force applied by the driver to the steering actuator is effectively transmitted to the steerable axle to apply a correspondingly greater force to cause the steerable wheels to break free of the mud or the like.

The fluid pressurising device may be selectively operable to lower the fluid pressure in the fluid pressure transmission line thereby to prevent operation of a said steering actuator causing movement of a said steerable axle. This provides a simple but effective way of preventing steer of the axle taking place. This may be desirable when the vehicle is travelling above a certain threshold speed.

The fluid pressurising device may include a piston which is selectively drivable to apply pressure to fluid in the fluid pressure transmission line, the piston having a portion which extends externally of the fluid pressurising device to provide a visual indicator of the position of the piston. This provides the user with a very simple and convenient way of determining the position of the piston. The piston effectively acts as a so-called "tell-tale". As will be discussed further below, the control apparatus preferably has various safety features one of which is that the fluid pressurising device is operated to lower fluid pressure in the fluid pressure transmission line in order to prevent the steerable axle from being steered during various fail-safe conditions and, in that state, the portion extending externally of the fluid pressurising device will typically be at its maximum extended position. This gives the user a ready visual indication that a fail-safe mode has been entered. On the other hand, when the fluid pressurising device of this example is operated to apply pressure to the fluid in the fluid pressure transmission line, typically the piston will be at its innermost position and said portion of the piston either extends not at all or only by a minimum amount externally of the fluid pressurising device.

The apparatus may comprise an axle lock for locking a said steerable axle against being steered. Such an axle lock can be arranged to operate if, for example, a vehicle in which the apparatus is mounted is moving above a predetermined threshold speed or if a fluid pressure loss in the apparatus is detected, for reasons of safety. The arrangement is preferably such that the axle lock is operated to lock a said steerable axle against being steered when the fluid pressurising device is not applying pressure to fluid in the fluid pressure transmission line. In the preferred embodiment, either the fluid pressurising device is operated to apply pressure to the fluid pressure transmission line in order to allow steering of the steering axle, during which time the axle lock is not operated, or the fluid pressurising device is not applying pressure to fluid in the fluid pressure transmission line and the axle lock is operated to lock a said steerable axle against being steered. This provides a yet further measure of safety in a simple and convenient manner.

According to a second aspect of the present invention, there is provided control apparatus for a vehicle steerable axle, the apparatus comprising: a transducer; a steering control for causing steerable wheels mounted on a steerable axle to be steered in accordance with a fluid pressure difference applied across first and second sides of the steering control; a steering detector; the transducer being connected on a first side to the first side of the steering control by a first fluid pressure line and on a second side to the second side of the steering control by a second fluid pressure line such that movement of a steering actuator operably connected to the transducer causes the transducer to pass high fluid pressure on one of the fluid pressure lines to the steering control and low fluid pressure on the other of the fluid pressure lines to the steering control thereby causing wheels on a said steerable axle to be steered in accordance with the movement of a said steering actuator; the steering detector being in fluid communication with the transducer and with the steering control and being arranged to detect steering movement of a said steerable axle and to equalise the fluid pressure applied to the first and second sides of the steering control when a desired amount of steer of a said steerable axle has been achieved thereby to prevent further steering of a said steerable axle; and, two fluid pressurising devices for respectively selectively applying pressure to fluid in the fluid pressure lines separately of operation of the transducer.

The steering control may comprise a proportional control valve which is operable to apply a force to steer a said steerable axle corresponding to the magnitude of the fluid pressure difference applied across the first and second sides of the steering control. As mentioned above, a greater force applied by the driver to the steering actuator is effectively transmitted to the steerable axle to apply a correspondingly greater force to cause the steerable wheels to break free if stuck in mud or the like.

The fluid pressurising devices are preferably selectively operable to lower the fluid pressure in both the first and second fluid pressure lines thereby to prevent operation of a said steering actuator causing movement of a said steerable axle.

The fluid pressurising devices may each include a piston which is drivable to apply pressure to fluid in the fluid pressure transmission line, each piston having a portion which extends externally of the respective fluid pressurising device to provide a visual indicator of the position of said piston. As mentioned above, the extending portions can act as "tell-tales" to indicate the position of the pistons.

The fluid pressurising devices may be linked so that substantially the same pressure is applied to the first and second fluid pressure lines on operation of the fluid pressurising devices.

The apparatus may comprise an axle lock for locking a said steerable axle against being steered. The arrangement is preferably such that the axle lock is operated to lock a said steerable axle against being steered when the fluid pressurising devices are not applying pressure to fluid in the fluid pressure lines.

According to a third aspect of the present invention, there is provided a method of controlling the steer of steerable wheels on a vehicle steerable axle, the vehicle having a steering actuator operably connected to a transducer; a steering control; a steering detector; the transducer being connected on a first side to the first side of the steering control by a first fluid pressure line and on a second side to the second side of the steering control by a second fluid pressure line; the steering detector being in fluid communication with the transducer and with the steering control; and, two fluid pressurising devices for respectively applying pressure to fluid in the fluid pressure lines; the method comprising causing said wheels to steer by: operating the fluid pressurising devices to apply pressure to fluid in each of the fluid pressure lines; operating the steering actuator thereby to cause the transducer to deliver high fluid pressure on the first fluid pressure line to the first side of the steering control and low fluid pressure on the second fluid pressure line to the second side of the steering control thereby causing wheels on the steerable axle to be steered in accordance with the movement of the steering actuator; the steering detector detecting steering movement of the steerable axle and equalising the fluid pressure applied to the first and second sides of the steering control when a desired amount of steer of the steerable axle has been achieved thereby to prevent further steering of the steerable axle.

The method preferably comprises the step of selectively operating the fluid pressurising devices to lower pressure in the fluid pressure lines thereby to prevent said wheels being steered on operation of the steering actuator.

The steering control may comprise a proportional control valve.

An embodiment of the present invention will now be described by way of example with reference to the accompanying drawings, in which:
Fig. 1 is a schematic drawing of an example of control apparatus according to the present invention; and,
Figs. 2A to 2C are schematic plan views showing a steerable axle with an example of an axle lock in different operation modes.

Referring to the drawings, control apparatus 1 for a steerable axle 50 includes a transducer 10, a steering control 20, a detector 30 and a steering actuator 40. The steerable axle 50 of this example is auxiliary to the main steering axle of the vehicle. However, the present invention is not limited as such and can be applied to the main steering axle of a vehicle, to a steerable axle on a trailer, etc., or to any other movable member.

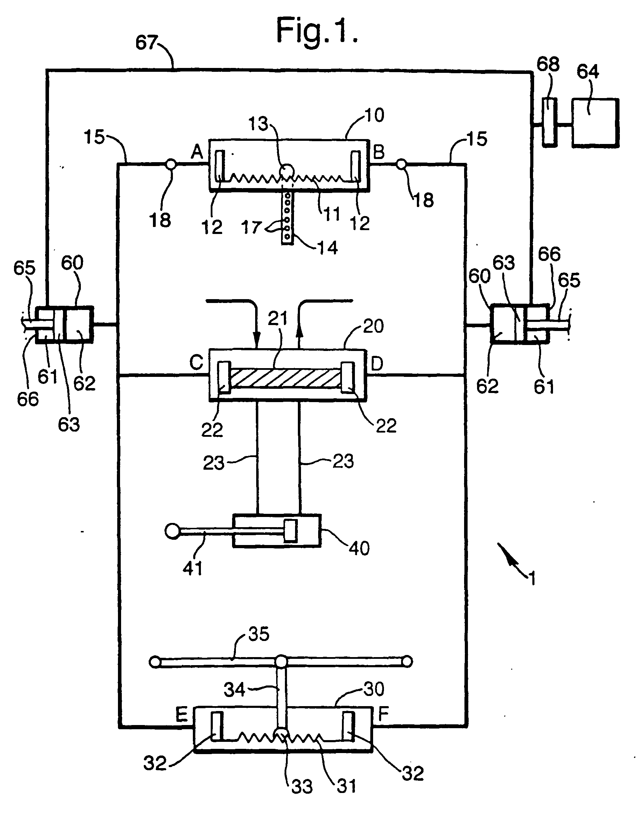

In the example shown, the transducer 10 is a rotary actuator. The rotary actuator transducer 10 includes an internal rack 11 at each end of which is mounted a piston 12. A pinion 13 is drivingly connected to the rack 11. A steering lever 14 is connected to the pinion 13. Rotary movement of the steering lever 14 about an axis through the pinion 13 causes the rack 11 to translate to the left or right in Figure 1. This in turn moves the pistons 12 to the left or right accordingly. The rotary actuator transducer 10 is filled with hydraulic oil and has ports A,B at each end corresponding to the pistons 12. A respective fluid pressure transmission line 15 is connected to each of the ports A,B of the rotary actuator transducer 10. In the preferred embodiment, the fluid pressure transmission lines 15 are rubber hoses. When the steering lever 14 is pivoted and the rack 11 moved for example to the left in Figure 1, movement of the left hand piston 12 to the left increases the pressure of the hydraulic fluid at port A. The right hand piston 12 moves to the left, which lowers the hydraulic fluid pressure at port B. The steering lever is arranged to move through 180° of travel which allows for excess travel of the vehicle main steering axle.

Each of the fluid pressure transmission lines 15 is connected to a respective port C,D of the steering control 20. In the preferred embodiment, the steering control 20 is a pilot operated proportional control valve 20, though a directional control valve could be used in other embodiments. This control valve 20 has an internal spool 21 at each end of which is mounted a respective piston 22. If for example high fluid pressure is applied to port C (and correspondingly low fluid pressure is applied to port D), the spool 21 is actuated to move to the right in Figure 1. The pressure difference between the ports C,D of the control valve may typically have a maximum in the range 2 to 9 Bar (atmospheres).

The control valve 20 is connected via two high pressure fluid transmission lines 23 to the steering actuator 40, the steering actuator 40 in this example being a hydraulic cylinder having a hydraulic ram 41. The control valve 20 is also connected via high fluid pressure transmission lines 24 to a hydraulic oil reservoir (not shown). In the preferred embodiment, each of the high fluid pressure transmission lines 23,24 is a rubber hose and the pressure in these lines 23,24 will typically be 130 Bar (atmospheres).

When a pressure difference is applied across the ports C,D of the control valve 20 and the spool 21 moves, hydraulic fluid at high pressure is delivered to the appropriate side of the steering actuator 40 to drive the hydraulic ram 41 in the appropriate direction to steer the steerable wheels mounted on the steerable axle 50 to which the hydraulic ram 41 is connected. Accordingly, when the steering lever 14 is moved, high fluid pressure is created and transmitted via one of the ports A,B of the rotary actuator transducer 10 (port A in the example described above) and delivered to one of the ports C,D (port C in the example described above) of the control valve 20. This causes high pressure hydraulic fluid to be delivered from the reservoir (not shown) to the steering actuator 40, which in turn causes appropriate movement of the steerable axle.

The detector 30 in the example shown is a rotary actuator similar to the rotary actuator transducer 10. The rotary actuator detector 30 has a rack 31 at each end of which is mounted a respective piston 32. A pinion 33 is drivingly connected to the rack 31. A connecting rod 34 connects the pinion 33 to the track rod(s) 35 of the steerable axle 50. Due to the amount of travel required, the pinion 33 in this rotary actuator 30 can be limited to 90° of movement.

When steerable wheels 51 on the steerable axle 50 are steered by operation of the steering actuator 40, the or each track rod 35 moves with the steerable wheels 51. Accordingly, by virtue of the connecting rod 34 and pinion 33, the rack 31 of the detector moves in a corresponding fashion to movement of the steerable axle 50. The rotary actuator detector 30 has ports E,F which correspond respectively to the pistons 32 mounted on the rack 31. The fluid pressure transmission lines 15 from the rotary actuator transducer 10 are connected to a respective one of the ports E,F of the rotary actuator detector 30. Thus, if for example the rack 31 of the rotary actuator detector 30 moves to the right in Figure 1, the high fluid pressure in the left hand fluid pressure transmission line 15 is relieved and, correspondingly, the low fluid pressure in the right hand fluid pressure transmission line 15 increases. Eventually, the pressures in the left hand and right hand fluid pressure transmission lines 15 equalise so that there is no pressure difference applied to the ports C,D of the control valve 20. As the pressures in the left and right hand fluid pressure transmission lines 15 and applied at the ports C,D of the control valve 20 equalise, the spool 21 of the control valve 20 centres again. This ceases delivery of high pressure hydraulic fluid to the steering actuator 40, thereby preventing further operation of the steering actuator 40 and preventing further steering of the steerable axle 50. When the steering lever 14 is pivoted further or pivoted in the opposite direction, a pressure differential is again created across the control valve 20, causing appropriate movement of the steering actuator 40 until the pressure differential is again removed by virtue of operation of the detector 30.

A respective fluid pressurising device 60 is connected to each of the fluid pressure transmission lines 15. Each fluid pressurising device 60 is divided internally into two chambers 61,62 by a piston 63. One of the chambers 62 is connected to the respective fluid pressure transmission line 15 and so is oil-filled. The other chamber 61 of each fluid pressurising device 60 is air filled and is connected to a source 64 of compressed air such as an air compressor. Each piston 63 has a rod 65 which extends through a rear wall 66 of the air chamber 61 so that it is visible externally of the fluid pressurising device 60. Furthermore, an air line 67 connects the air chambers 61 of the two fluid pressurising devices 60 so that the pressures in the fluid pressurising devices 60 are the same. The source 64 of pressurised air is conveniently connected to the air line 67. When it is desired to have the steerable axle 50 in steering operation, the source 64 of compressed air is operated to supply high pressure air into the air chambers 61 of the fluid pressurising devices 60. This drives the pistons 63 to cause an increase in pressure in the oil chambers 62 and therefore in the fluid pressure transmission lines 15. This increase in fluid pressure in the fluid pressure transmission lines 15 takes up any "sponginess" which can otherwise arise in the fluid pressure transmission lines 15. At present, it is believed that this sponginess arises because of the presence of the springs conventionally provided in the proportional control valve 20. The increase in fluid pressure ensures that operation of the steering lever 14 causes appropriate movement of the spool 21 of the steering control 20. It has been found that if pressure is not applied to the fluid pressure transmission lines 15 then the sponginess which otherwise occurs in the fluid pressure transmission lines 15 prevents effective delivery of fluid pressure to the ports C,D of the steering control 20 when the steering lever 14 is actuated. The application of pressure to the fluid pressure transmission lines 15 by the fluid pressurising devices 60 effectively "tightens up" the whole of the hydraulic parts of the system, ensuring that operation of the steering lever 14 provides for a corresponding movement of the spool 21 of valve of the steering control 20.

Similarly, when it is desired to have the wheels 51 not steer on operation of the steering lever 14, through operation of a suitable valve 68, air pressure in the air chambers 61 of the fluid pressurising devices 60 can be lowered. This allows the pistons 63 to be forced back by the pressure of fluid in the fluid pressure transmission lines 15 thereby causing a significant pressure drop in the fluid pressure transmission lines 15. This drop in the fluid pressure, and because the pistons 63 in the fluid pressurising devices 60 are relatively free to move, means that operation of the steering lever 14 does not respectively increase or decrease the pressures applied to the ports C,D of the steering control 20. This in turn means that the spool 21 of the steering control 20 is not operated when the steering lever 14 moves, thereby preventing a steering action of the steerable wheels 51.

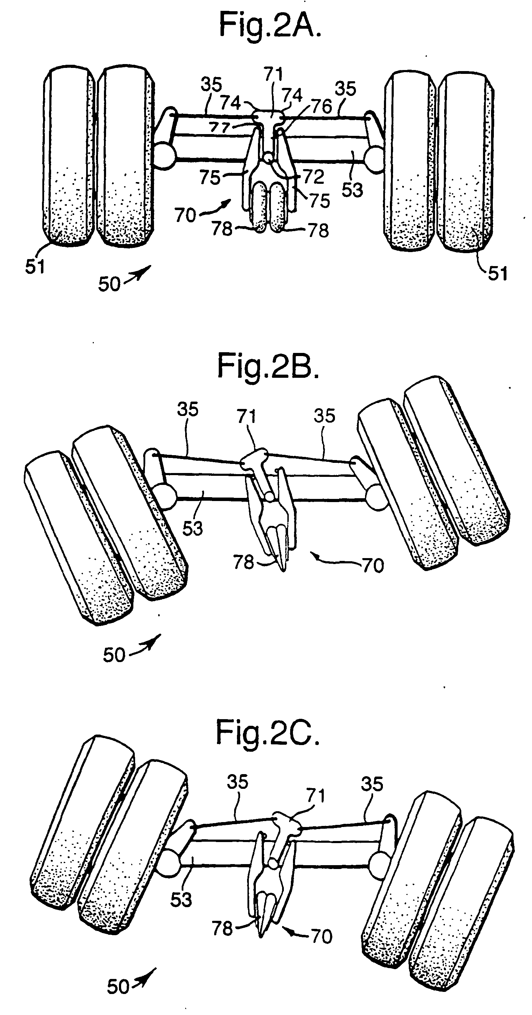

It is most preferred for the steerable axle 50 to be positively mechanically clamped in the straight ahead position when steering is not required or desired, for example because of the vehicle speed or because of a failure of a part of the system 1. An example of a suitable clamping device 70 is indicated in Figures 2A to 2C. Such a device was first disclosed in the applicant's WO-A-97/26170.

The axle clamping device 70 has a T-shape connecting lever 71. The connecting lever 71 is pivotally fixed at one end 72 to the fixed axle beam 53 of the steerable axle 50. Each end of the cross bar 74 of the T-shape connecting lever 71 is pivotally fixed to a respective track rod 35. Thus, as the wheels 51 of the steerable axle 50 are steered, and the respective track rods 35 move to the left and right, the connecting lever 71 is caused to pivot to the left or right about the pivot point 72 as shown in Figures 2B and 2C.

Steering stops 75 in the form of lever arms 75 are pivotally fixed to the fixed axle beam 53 of the steerable axle 50 either side of the stem 76 of the connecting lever 71. The pivot point of each steering stop 75 is adjacent the pivot point 72 of the connecting lever 71. A first end 77 of each steering stop 75 engages the stem 76 of the connecting lever 71 in the straight ahead position of the steerable axle 50 as shown in Figure 2A. As the connecting lever 71 pivots to the left or right, the associated left or right side steering stop 75 follows the connecting lever 71 and is thereby caused to pivot about its pivot point as shown in Figures 2B and 2C.

The other end of each steering stop 75 carries a respective air bag or bellow 78, the air bags 78 being in contact with one another at all times. In the normal, steering condition of the system 1, the air bags 78 are not pressurised. Thus, as the connecting lever 71 pivots to the left or right, the air bags 78 offer no resistance to the pivoting. Thus, steering of the steerable axle 50 is allowed.

When steering of the steerable axle 50 is to be inhibited, both of the air bags 78 are inflated by pressurised air delivered from a suitable source. This source may conveniently be the source 64 of pressurised air used to pressurise the fluid pressurising devices 60 and which can be selectively connected to the air bags 78 by the valve 68. The valve 68, under control of signals from a control unit (not shown), normally prevents air being transmitted to the air bags 78. When clamping of the axle 50 is required, the air bags 78 are inflated. This causes the connecting lever 71 to be driven to the straight ahead condition shown in Figure 2A by virtue of the steering stops 75 being pivoted under the action of the pressurised air bags 78 inflating against each other. The steerable axle 50 is thereby driven to and clamped in its straight ahead condition. The valve 68 can act in a fail-safe mode so that, on loss of power or hydraulic pressure, the air bags 78 are automatically inflated in order to drive the steerable axle 50 to its straight ahead condition and clamp the axle 50 in the straight ahead condition. The solenoid valve 68 can also be operated to clamp the axle 50 in the straight ahead condition when the vehicle speed exceeds a certain threshold. Preferably, the valve 68 is connected such that pressurisation of the air bags 78 occurs when the pressurising devices 60 are not pressurised by the source 64 and such that the air bags 78 deflate when pressurised air is supplied to the pressurising devices 60. The arrangement may be such that the pressurising devices exhaust into the air bags 78 and vice versa, all under control of the valve 68, and with additional pressurised air being provided by the source 64 as required.

It will be appreciated that the present invention provides an extremely simple mechanism for achieving steer of a steerable axle. The main operative parts of the apparatus for moving the steerable wheels are entirely hydraulic, avoiding the need for complicated, expensive and unreliable electronic components or cables. A pressure differential is applied across a control valve 20 which operates to deliver high pressure hydraulic fluid to a hydraulic ram 41 to steer the steerable axle as required. Once the steerable axle has moved by the appropriate amount of steer, the arrangement of the detector 30 automatically ensures that the pressure difference across the control valve 20 is reduced to zero, thereby preventing further movement of the steerable axle. When the steering actuator 14 is pivoted further or pivoted in the reverse direction, a pressure differential is again created across the control valve 20, causing appropriate movement of the steering actuator 40 until the pressure differential is again removed by virtue of operation of the detector 30. Unlike known hydraulic systems, the control apparatus 1 can be operated to prevent steer of the steerable axle occurring when desired or as necessary.

The use of a proportional control valve 20 means that the force applied to steer the steerable axle 50 automatically increases in proportion to the force applied to the steering lever 14. This can be helpful if for example the wheels 51 become stuck in mud which might otherwise prevent the steerable wheels 51 from being steered. The use of the fluid pressurising devices 60 to apply pressure to the fluid pressure transmission lines 15 ensures that the control valve 20 operates properly and accurately whenever steering is required. The fluid pressurising devices 60 can be operated to relieve fluid pressure in the fluid pressure transmission lines 15 thereby preventing steer of the steerable axle 50 when steering is not required. The linking of the fluid pressurising devices 60 with operation of the axle lock 70 means that the system can be in one of two conditions, namely (i) a condition in which the fluid pressure in the fluid pressure transmission lines 15 is not sufficient to cause steering and moreover the axle lock 70 mechanically clamps the steerable axle 50 against steering and (ii) a condition in which the fluid pressure in the fluid pressure transmission lines 15 is high enough to allow steering of the steerable axle 50 and the axle lock 70 provides substantially no resistance against such steering.

The present invention can be applied to any steerable axle. The steerable axle may for example by the main steering axle of a vehicle. Alternatively, and in the preferred embodiment, the steerable axle is an auxiliary steered axle of a vehicle which is secondary to the main steering axle of the vehicle, as mentioned in the introduction above. Thus, the present invention provides apparatus which allows an auxiliary steered axle to be provided on a vehicle such as a truck in a reliable and inexpensive manner. By way of comparison, it is estimated that the apparatus of the present invention can be installed in a truck within four to six hours whereas the known systems presently available, which either rely on electronics or complicated mechanical linkages, can take up to one hundred hours to install.

In a vehicle where the steerable axle to which the present invention is applied is an auxiliary steered axle (secondary to the main steering axle of the vehicle), it is preferred that the auxiliary steered axle only be operable at relatively low speed (say below 40mph/65kmh or below 20mph/32kmh) and for the auxiliary steered axle to be fixed in the straight ahead position above this speed.

In the usual installation of the apparatus 1, the steering lever 14 will be connected to the prime vehicle steering system which operates the main (usually front) steering axle of the vehicle. Clearly, even if the auxiliary steered axle is locked in the straight ahead position at high speed, it is necessary to be able to steer the main steering axle in such a case and this is allowed because the steering lever 14 can still be moved when the pressure in the fluid pressure transmission lines 15 drops by relaxation of the fluid pressurising devices 60.

The steering lever 14 of this example has several connection points 17, such as a series of bolt holes, which provide a range of connection points to which the prime vehicle steering actuator can be connected so that an appropriate steering ratio between the vehicle main steering axle and the vehicle auxiliary steered axle can be achieved. It will be understood that an auxiliary steered axle will normally only be used for steering at low speeds and it is therefore only necessary for the amount of relative steer between the main steering axle and the auxiliary steered axle to be approximately equal to the optimum setting.

In the preferred embodiment, the apparatus 1 has various pressure switches which detect pressure drop in any of the hydraulic lines (which might occur if for example a hydraulic pump fails or a hydraulic hose is cut) and which cause the steerable axle to be locked in the straight ahead position on operation and which cause the fluid pressurising devices 60 to be depressurised. Where the arrangement is such that the air bags 78 and the fluid pressurising devices 60 exhaust into each other, then if the air bags 78 burst or otherwise rupture, the fluid pressurising devices 60 automatically depressurise thereby preventing movement of steering lever 14 from causing operation of the steering control 20.

Test points 18 can be provided at various points in the hydraulic hoses so that the pressure at various points can be detected and monitored, for example during testing. Moreover, the pressure in the left hand side of the apparatus 1 can be equalised with the pressure in the right hand side of the apparatus 1 during installation and servicing in a very simple manner by connecting a hose across test points 18 provided on the left hand and right hand sides of the apparatus 1.

## Claims

1. Control apparatus (1) for a steerable axle, the control apparatus (1) comprising:
a transducer (10) operable to provide a fluid pressure signal corresponding to movement of a steering actuator (40,41) ;
a steering control (20) connected to the transducer (10) by a fluid pressure transmission line (15) for causing a steerable axle (50) to be steered in accordance with the fluid pressure signal received along the fluid pressure transmission line (15) from the transducer (10);
a detector (30) for detecting steering movement of said steerable axle (50) and for causing the fluid pressure signal applied to the steering control (20) to be removed when a desired amount of steer of a said steerable axle (50) has been achieved; **characterized by**
a fluid pressurising device (60) for selectively applying pressure to fluid in the fluid pressure transmission line (15) separately of operation of the transducer (10).

2. Control apparatus (1) according to claim 1, comprising a steering actuator (40,41) which is operably connected to the transducer (10) to obtain steering movement of a said steerable axle (50) on operation of the steering actuator (40,41).

3. Control apparatus (1) according to claim 1 or claim 2, wherein the detector (30) is connected to the fluid pressure transmission line (15).

4. Control apparatus (1) according to any of claims 1 to 3, wherein the steering control (20) comprises a proportional control valve (20) which is operable to receive a fluid pressure signal and apply a force to steer a said steerable axle (50) corresponding to the magnitude of the fluid pressure signal.

5. Control apparatus (1) according to any of claims 1 to 4, wherein the fluid pressurising device (60) is selectively operable to lower the fluid pressure in the fluid pressure transmission line (15) thereby to prevent operation of a said steering actuator (40,41) causing movement of a said steerable axle (50).

6. Control apparatus (1) according to any of claims 1 to 5, wherein the fluid pressurising device (60) includes a piston (63) which is selectively drivable to apply pressure to fluid in the fluid pressure transmission line (15), the piston (63) having a portion (65) which extends externally of the fluid pressurising device (60) to provide a visual indicator of the position of the piston (63).

7. Control apparatus (1) according to any of claims 1 to 6, comprising an axle lock (70) for locking a said steerable axle (50) against being steered.

8. Control apparatus (1) according to claim 7, wherein the arrangement is such that the axle lock (70) is operated to lock a said steerable axle (50) against being steered when the fluid pressurising device (60) is not applying pressure to fluid in the fluid pressure transmission line (15).

9. Control apparatus (1) according to claim 1, wherein
the steering control (20) is arranged for causing steerable wheels (51) mounted on a steerable axle (50) to be steered in accordance with a fluid pressure difference applied across first and second sides of the steering control (20);
the transducer (10) is connected on a first side to the first side of the steering control (20) by a first fluid pressure line (15) and on a second side to the second side of the steering control (20) by a second fluid pressure line (15) such that movement of a steering actuator (40,41) operably connected to the transducer (10) causes the transducer (10) to pass high fluid pressure on one of the fluid pressure lines to the steering control (20) and low fluid pressure on the other of the fluid pressure lines to the steering control (20) thereby causing wheels (51) on a said steerable axle (50) to be steered in accordance with the movement of a said steering actuator (40, 41);
the detector (30) is in fluid communication with the transducer (10) and with the steering control (20) and is arranged to detect steering movement of a said steerable axle (50) and to equalise the fluid pressure applied to the first and second sides of the steering control (20) when a desired amount of steer of a said steerable axle (50) has been achieved thereby to prevent further steering of a said steerable axle (50); and,
two fluid pressurising devices (60) are provided for respectively selectively applying pressure to fluid in the fluid pressure (15) lines separately of operation of the transducer (10).

10. Control apparatus (1) according to claim 9, wherein the steering control (20) comprises a proportional control valve (20) which is operable to apply a force to steer a said steerable axle (50) corresponding to the magnitude of the fluid pressure difference applied across the first and second sides of the steering control (20).

11. Control apparatus (1) according to claim 9 or claim 10, wherein the fluid pressurising devices (60) are selectively operable to lower the fluid pressure in both the first and second fluid pressure lines (15) thereby to prevent operation of a said steering actuator (40,41) causing movement of a said steerable axle (50).

12. Control apparatus (1) according to any of claims 9 to 11, wherein the fluid pressurising devices (60) each include a piston (63) which is drivable to apply pressure to fluid in the fluid pressure transmission line (15), each piston (63) having a portion (65) which extends externally of the respective fluid pressurising device (60) to provide a visual indicator of the position of said piston (63).

13. Control apparatus (1) according to any of claims 9 to 12, wherein the fluid pressurising devices (60) are linked so that substantially the same pressure is applied to the first and second fluid pressure lines (15) on operation of the fluid pressurising devices (60).

14. Control apparatus (1) according to any of claims 9 to 13, comprising an axle lock (70) for locking a said steerable axle (50) against being steered.

15. Control apparatus (1) according to claim 14, wherein the arrangement is such that the axle lock (70) is operated to lock a said steerable axle (50) against being steered when the fluid pressurising devices (60) are not applying pressure to fluid in the fluid pressure lines (15).

16. A method of controlling the steer of steerable wheels (51) on a vehicle steerable axle (50), the vehicle having a steering actuator (40,41) operably connected to a transducer (10); a steering control (20); a steering detector (30); the transducer (10) being connected on a first side to the first side of the steering control (20) by a first fluid pressure line (15) and on a second side to the second side of the steering control (20) by a second fluid pressure line (15); the steering detector (30) being in fluid communication with the transducer (10) and with the steering control (20); and, two fluid pressurising devices (60) for respectively applying pressure to fluid in the fluid pressure lines (15); the method comprising causing said wheels (51) to steer by:
operating the fluid pressurising devices (60) to apply pressure to fluid in each of the fluid pressure lines (15);
operating the steering actuator (40,41) thereby to cause the transducer (10) to deliver high fluid pressure on the first fluid pressure line (15) to the first side of the steering control (20) and low fluid pressure on the second fluid pressure line (15) to the second side of the steering control (20) thereby causing wheels (51) on the steerable axle (50) to be steered in accordance with the movement of the steering actuator (40,41);
the steering detector (30) detecting steering movement of the steerable axle (50) and equalising the fluid pressure applied to the first and second sides of the steering control (20) when a desired amount of steer of the steerable axle (50) has been achieved thereby to prevent further steering of the steerable axle (50).

17. A method according to claim 16, comprising the step of selectively operating the fluid pressurising devices (60) to lower pressure in the fluid pressure lines (15) thereby to prevent said wheels (51) being steered on operation of the steering actuator (40,41).

18. A method according to claim 16 or claim 17, wherein the steering control (20) comprises a proportional control valve (20).

## Patentansprüche

1. Steuereinrichtung (1) für eine lenkbare Achse, wobei die Steuereinrichtung (1) umfasst:
einen Wandler (10), der betätigbar ist, um ein Fluiddrucksignal zu liefern, das der Bewegung eines Lenkbetätigers (40, 41) entspricht;
eine Lenksteuerung (20), die mit dem Wandler (10) über eine Fluiddruck-Übertragungsleitung (15) verbunden ist, um zu veranlassen, dass eine lenkbare Achse (50) in Entsprechung zu dem Fluiddrucksignal gelenkt wird, das entlang der Fluiddruck-Übertragungsleitung (15) von dem Wandler (10) erhalten wird;
einen Detektor (30), um die Lenkbewegung der genannten lenkbaren Achse (50) zu erkennen und um zu veranlassen, dass das Fluiddrucksignal, welches an der Lenksteuerung (20) anliegt, entfernt wird, wenn ein gewünschtes Ausmaß an Lenkung einer genannten lenkbaren Achse (50) erreicht ist; **gekennzeichnet durch**
eine Fluiddruck erzeugende Vorrichtung (60), um wahlweise Fluid in der Fluiddruck-Übertragungsleitung (15), gesondert von der Tätigkeit des Wandlers (10), unter Druck zu setzen.

2. Steuereinrichtung (1) nach Anspruch 1, einen Lenkbetätiger (40, 41) umfassend, welcher betrieblich mit dem Wandler (10) verbunden ist, um eine Lenkbewegung einer genannten lenkbaren Achse (50) bei Betätigung des Lenkbetätigers (40, 41) zu erhalten.

3. Steuereinrichtung (1) nach Anspruch 1 oder 2, wobei der Detektor (30) mit der Fluiddruck-Übertragungsleitung (15) verbunden ist.

4. Steuereinrichtung (1) nach einem der Ansprüche 1 bis 3, wobei die Lenksteuerung (20) ein Proportionalsteuervenitl (20) umfasst, das betätigbar ist, um ein Fluiddrucksignal zu erhalten und eine Kraft aufzubringen, um die genannte lenkbare Achse (50) in Entsprechung zu der Stärke des Fluiddrucksignales zu lenken.

5. Steuereinrichtung (1) nach einem der Ansprüche 1 bis 4, wobei die Fluiddruck erzeugende Vorrichtung (60) wahlweise betätigbar ist, um den Fluiddruck in der Fluiddruck-Übertragungsleitung (15) abzusenken, um **dadurch** eine Tätigkeit des genannten Lenkbetätigers (40, 41) zu verhindern, welche eine Bewegung einer genannten lenkbaren Achse (50) verursacht.

6. Steuereinrichtung (1) nach einem der Ansprüche 1 bis 5, wobei die Fluiddruck erzeugende Vorrichtung (60) einen Kolben (63) beinhaltet, der wahlweise bewegbar ist, um das Fluid in der Fluiddruck-Übertragungsleitung (15) unter Druck zu setzen, wobei der Kolben (63) einen Teil (65) besitzt, der sich außerhalb der Fluiddruck erzeugenden Vorrichtung (60) erstreckt, um eine visuelle Anzeige für die Stellung des Kolbens (63) zu liefern.

7. Steuereinrichtung (1) nach einem der Ansprüche 1 bis 6, eine Achsverriegelung (70) umfassend, um eine genannte lenkbare Achse (50) gegen das Gelenkt werden zu verriegeln.

8. Steuereinrichtung (1) nach Anspruch 7, wobei die Anordnung so getroffen ist, dass die Achsverriegelung (70) betätigt wird, um eine genannte lenkbare Achse (50) dagegen, dass sie gelenkt wird, zu verriegeln, wenn die Fluiddruck erzeugende Vorrichtung (60) keinen Druck in dem Fluid in der Fluiddruck-Übertragungsleitung (15) erzeugt.

9. Steuereinrichtung (1) nach Anspruch 1, wobei
die Lenksteuerung (20) dazu eingerichtet ist, um zu verursachen, dass lenkbare Räder (51), die an einer lenkbaren Achse (50) angeordnet sind, in Entsprechung zu einer Fluiddruckdifferenz gelenkt werden, die zwischen erster und zweiter Seite der Lenksteuerung (20) anliegt;
der Wandler (10) auf einer ersten Seite mit der ersten Seite der Lenksteuerung (20) durch eine erste Fluiddruckleitung (15) und auf einer zweiten Seite mit der zweiten Seite der Lenksteuerung (20) durch eine zweite Fluiddruckleitung (15) verbunden ist, so dass die Bewegung eines Lenkbetätigers (40, 41), der mit dem Wandler (10) betrieblich verbunden ist, verursacht, dass der Wandler (10) hohen Fluiddruck in einer der Fluiddruckleitungen zu der Lenksteuerung (20) und niedrigen Fluiddruck in der anderen der Fluiddruckleitungen zu der Lenksteuerung (20) leitet, um **dadurch** zu veranlassen, dass Räder (51) an der genannten lenkbaren Achse (50) in Entsprechung zu der Bewegung eines genannten Steuerbetätigers (40, 41) gelenkt werden;
der Detektor (30) in Fluidverbindung mit dem Wandler (10) und mit der Lenksteuerung (20) steht und dazu eingerichtet ist, um die Lenkbewegung einer genannten lenkbaren Achse (50) zu erkennen und den Fluiddruck auszugleichen, der an erster und zweiter Seite der Lenksteuerung (20) angelegt wird, wenn ein gewünschtes Ausmaß an Lenkung einer genannten lenkbaren Achse (50) erreicht ist, um **dadurch** das weitere Lenken einer genannten lenkbaren Achse (50) zu verhindern, und
zwei Fluiddruck erzeugende Vorrichtungen (60) vorgesehen sind, um jeweils wahlweise das Fluid in den Fluiddruckleitungen (15) unter Druck zu setzen, gesondert von der Tätigkeit des Wandlers (10).

10. Steuereinrichtung (1) nach Anspruch 9, wobei die Lenksteuerung (20) ein Proportionalsteuerventil (20) umfasst, das betätigbar ist, um eine Kraft aufzubringen, um eine genannte lenkbare Achse (50) in Entsprechung zu der Größe der Fluiddruckdifferenz zu lenken, die zwischen erster und zweiter Seite der Lenksteuerung (20) anliegt.

11. Steuereinrichtung (1) nach Anspruch 9 oder Anspruch 10, wobei die Fluiddruck erzeugenden Vorrichtungen (60) wahlweise betätigbar sind, um den Fluiddruck sowohl in erster als auch zweiter Fluiddruckleitung (15) abzusenken, um **dadurch** eine Tätigkeit eines genannten Lenkbetätigers (40, 41) zu verhindern, welche eine Bewegung einer genannten lenkbare Achse verursacht.

12. Steuereinrichtung (1) nach einem der Ansprüche 9 bis 11, wobei die Fluiddruck erzeugenden Vorrichtungen (60) jede einen Kolben (63) beinhaltet, der bewegbar ist, um das Fluid in der Fluiddruck-Übertragungsleitung (15) unter Druck zu setzen, wobei jeder Kolben (63) einen Teil (65) aufweist, der sich außerhalb der betreffenden Fluiddruck erzeugenden Vorrichtung (60) erstreckt, um einen visuellen Anzeiger für die Position des genannten Kolbens (63) zu liefern.

13. Steuereinrichtung (1) nach einem der Ansprüche 9 bis 12, wobei die Fluiddruck erzeugenden Vorrichtungen (60) so verbunden sind, dass im wesentlichen der gleiche Druck an der ersten und der zweiten Fluiddruckleitung (15) beim Betrieb der Fluiddruck erzeugenden Vorrichtungen (60) angelegt wird.

14. Steuereinrichtung (1) nach einem der Ansprüche 9 bis 13, eine Achsverriegelung (70) umfassend, um eine genannte lenkbare Achse (50) dagegen, dass sie gelenkt wird, zu verriegeln.

15. Steuereinrichtung (1) nach Anspruch 14, wobei die Einrichtung so getroffen ist, dass die Achsverriegelung (70) betätigt wird, um eine genannte lenkbare Achs (50) dagegen, dass sie gelenkt wird, zu verriegeln, wenn die Fluiddruck erzeugenden Vorrichtungen (60) keinen Druck in dem Fluid in den Fluiddruckleitungen (15) erzeugen.

16. Verfahren zum Steuern der Lenkung lenkbarer Räder (51) an einer lenkbaren Fahrzeugachse (50), wobei das Fahrzeug einen Lenkbetätiger (40, 41), der betrieblich mit einem Wandler (10) verbunden ist; eine Lenksteuerung (20) und einen Lenkdetektor (30) aufweist; wobei der Wandler (10) an einer ersten Seite mit der ersten Seite der Lenksteuerung (20) über eine erste Fluiddruckleitung (15) und auf einer zweiten Seite mit der zweiten Seite der Lenksteuerung (20) über eine zweite Fluiddruckleitung (15) verbunden ist; der Lenkdetektor (30) in Fluidverbindung mit dem Wandler (10) und mit der Lenksteuerung (20) steht, und zwei Fluiddruck erzeugende Vorrichtungen (60) vorgesehen sind, um jeweils Druck in dem Fluid in den Fluiddruckleitungen (15) zu erzeugen, wobei das Verfahren umfasst, dass das Lenken der genannten Räder (51) bewirkt wird durch:
Betätigen der Fluiddruck erzeugenden Vorrichtungen (60), um Druck in dem Fluid in jeder der Fluiddruckleitungen (15) zu erzeugen;
Betätigen des Steuerbetätigers (40, 41), um **dadurch** zu bewirken, dass der Wandler (10) Fluid hohen Druckes in der ersten Fluiddruckleitung (15) der ersten Seite der Lenksteuerung (20) und Fluid niedrigen Druckes in der zweiten Fluiddruckleitung (15) der zweiten Seite der Lenksteuerung (20) liefert, um **dadurch** zu bewirken, dass Räder (51) an der lenkbaren Achse (50) in Entsprechung mit der Bewegung des Lenkbetätigers (40, 41) gelenkt werden;
wobei der Lenkdetektor (30) die Lenkbewegung der lenkbaren Achse (50) erkennt und den Fluiddruck, der an erster und zweiter Seite der Lenksteuerung (20) anliegt, ausgleicht, wenn ein gewünschtes Ausmaß an Lenkung der lenkbaren Achse (50) erreicht ist, um **dadurch** ein weiteres Lenken der lenkbaren Achse (50) zu verhindern.

17. Verfahren nach Anspruch 16, umfassend den Schritt des wahlweisen Betätigens der Fluid erzeugenden Vorrichtungen (60), um den Druck in den Fluiddruckleitungen (15) abzusenken, um **dadurch** zu verhindern, dass die genannten Räder (51) bei Betätigen des Lenkbetätigers (40, 41) gelenkt werden.

18. Verfahren nach Anspruch 16 oder 17, wobei die Lenksteuerung (20) ein Proportionalsteuerventil (20) umfasst.

## Revendications

1. Appareil de commande (1), pour un essieu orientable, l'appareil de commande (1) comprenant :
un transducteur (10) pouvant fonctionner de façon à fournir un signal de pression de fluide correspondant au mouvement d'un actionneur de direction (40,41) ;
une commande de direction (20) raccordée au transducteur (10) par une ligne de transmission de pression de fluide (15) afin de provoquer l'orientation d'un essieu orientable (50) conformément au signal de pression de fluide reçu le long de la ligne de transmission de pression de fluide (15) et provenant du transducteur (10) ;
un détecteur (30) pour détecter le mouvement d'orientation dudit essieu orientable (50) et pour provoquer l'annulation du signal de pression de fluide appliqué à la commande de direction (20) quand l'orientation souhaitée dudit essieu orientable (50) a été atteinte ; **caractérisé par**
un dispositif de pressurisation de fluide (60) permettant d'appliquer sélectivement la pression au fluide dans la ligne de transmission de pression de fluide (15), indépendamment du fonctionnement du transducteur (10).

2. Appareil de commande (1), selon la revendication 1, comprenant un actionneur de direction (40,41) qui est relié de façon opérationnelle au transducteur (10) afin d'obtenir un mouvement d'orientation dudit essieu orientable (50) lors du fonctionnement de l'actionneur de direction (40,41).

3. Appareil de commande (1), selon la revendication 1 ou 2, dans lequel le détecteur (30) est connecté à la ligne de transmission de pression de fluide (15).

4. Appareil de commande (1), selon l'une quelconque des revendications 1 à 3, dans lequel la commande de direction (20) comprend une vanne de commande proportionnelle (20) qui peut fonctionner de façon à recevoir un signal de pression de fluide et à appliquer une force pour orienter un essieu orientable (50) correspondant à la magnitude du signal de pression de fluide.

5. Appareil de commande (1), selon l'une quelconque des revendications 1 à 4, dans lequel le dispositif de pressurisation de fluide (60) peut fonctionner de manière sélective, afin de réduire la pression de fluide dans la ligne de transmission de pression de fluide (15) en évitant ainsi le fonctionnement dudit actionneur de direction (40,41) provoquant le mouvement d'un essieu orientable (50).

6. Appareil de commande (1), selon l'une quelconque des revendications 1 à 5, dans lequel le dispositif de pressurisation de fluide (60) comprend un piston (63) qui est orientable sélectivement pour appliquer une pression au fluide dans la ligne de transmission de pression de fluide (15), le piston (63) ayant une portion (65) qui s'étend extérieurement au dispositif de pressurisation de fluide (60), afin de fournir un indicateur visuel de la position du piston (63).

7. Appareil de commande (1), selon l'une quelconque des revendications 1 à 6, comprenant un verrou d'essieu (70) pour verrouiller un essieu orientable (50), afin d'éviter qu'il ne soit orienté.

8. Appareil de commande (1), selon la revendication 7, dans lequel le dispositif est tel que le verrou d'essieu (70) fonctionne de façon à verrouiller un essieu orientable (50) pour qu'il ne soit pas orienté quand le dispositif de pressurisation de fluide (60) n'applique pas de pression au fluide dans la ligne de transmission de pression de fluide (15).

9. Appareil de commande (1), selon la revendication 1, dans lequel
la commande de direction (20) est disposée, de façon à provoquer l'orientation des roues orientables (51) montées sur un essieu orientable (50), en fonction d'une différence de pression de fluide appliquée à travers les premier et second côtés de la commande de direction (20) ;
le transducteur (10) est connecté sur un premier côté, au premier côté de la commande de direction (20), par une première ligne de pression de fluide (15) et sur un second côté, au second côté de la commande de direction (20), par une seconde ligne de pression de fluide (15), de sorte que le mouvement d'un actionneur de direction (40, 41) relié de manière opérationnelle au transducteur (10) provoque la transmission, par le transducteur (10), d'une pression de fluide élevée sur l'une des lignes de pression de fluide à la commande de direction (20) et une basse pression de fluide sur l'autre ligne de pression de fluide à la commande de direction (20), en provoquant ainsi l'orientation des roues (51) sur ledit essieu orientable (50), en fonction du mouvement dudit actionneur de direction (40, 41) ;
le détecteur (30) est en communication fluidique avec le transducteur (10) et avec la commande de direction (20) et est disposé de façon à détecter le mouvement de direction dudit essieu orientable (50) et à égaliser la pression de fluide appliquée aux premier et second côtés de la commande de direction (20) quand une orientation souhaitée d'un essieu orientable (50) a été atteinte, de façon à éviter une orientation ultérieure dudit essieu orientable (50), et
deux dispositifs de pressurisation de fluide (60) sont fournis pour appliquer respectivement sélectivement la pression au fluide dans les lignes de pression de fluide (15), indépendamment du fonctionnement du transducteur (10).

10. Appareil de commande (1), selon la revendication 9, dans lequel la commande de direction (20) comprend une vanne de commande proportionnelle (20), pouvant fonctionner de façon à appliquer une force, pour orienter un essieu orientable (50), correspondant à la magnitude de la différence de pression de fluide appliquée à travers le premier et le second côtés de la commande de direction (20).

11. Appareil de commande (1), selon la revendication 9 ou 10, dans lequel les dispositifs de pressurisation de fluide (60) peuvent fonctionner de manière sélective pour réduire la pression de fluide dans la première et la seconde lignes de pression de fluide (15), afin d'éviter ainsi le fonctionnement dudit actionneur de direction (40, 41) en provoquant le mouvement dudit essieu orientable (50).

12. Appareil de commande (1), selon l'une quelconque des revendications 9 à 11, dans lequel les dispositifs de pressurisation de fluide (60) comprennent chacun un piston (63) qui peut être commandé pour appliquer une pression au fluide dans la ligne de transmission de pression de fluide (15), chaque piston (63) ayant une portion (65) qui s'étend à l'extérieur du dispositif de pressurisation de fluide respectif (60), afin de fournir un indicateur visuel de la position dudit piston (63).

13. Appareil de commande (1), selon l'une quelconque des revendications 9 à 12, dans lequel les dispositifs de pressurisation de fluide (60) sont liés, de sorte que sensiblement la même pression soit appliquée à la première et à la seconde lignes de pression de fluide (15) lors du fonctionnement des dispositifs de pressurisation de fluide (60).

14. Appareil de commande (1), selon l'une quelconque des revendications 8 à 13, comprenant un verrou d'essieu (70), permettant de verrouiller un essieu orientable (50) pour éviter qu'il ne soit orienté.

15. Appareil de commande (1), selon la revendication 14, dans lequel le dispositif est tel que le verrou d'essieu (70) fonctionne de façon à verrouiller un essieu orientable (50) pour éviter qu'il ne soit orienté, quand les dispositifs de pressurisation de fluide (60) n'appliquent pas de pression au fluide dans les lignes de pression de fluide (15).

16. Procédé de contrôle de l'orientation des roues orientables (51) sur un essieu orientable de véhicule (50), le véhicule ayant un actionneur de direction (40,41) connecté de manière opérationnelle à un transducteur (10) ; une commande de direction (20) ; un détecteur de direction (30) ; le transducteur (10) étant connecté sur un premier côté au premier côté de la commande de direction (20) par une première ligne de pression de fluide (15) et sur un second côté, au second côté de la commande de direction (20), par une seconde ligne de pression de fluide (15) ; le détecteur de direction (30) étant en communication fluidique avec le transducteur (10) et avec la commande de direction (20) ; et, deux dispositifs de pressurisation de fluide (60) pour appliquer respectivement une pression au fluide dans les lignes de pression de fluide (15) ; le procédé comprenant l'orientation desdites roues (51) en :
faisant fonctionner les dispositifs de pressurisation de fluide (60) afin d'appliquer de la pression au fluide dans chacune des lignes de pression de fluide (15) ;
faisant fonctionner l'actionneur de direction (40, 41) en provoquant la fourniture, par le transducteur (10), d'une pression de fluide élevée sur la première ligne de pression de fluide (15) au premier côté de la commande de direction (20) et une basse pression de fluide, sur la seconde ligne de pression de fluide (15), au second côté de la commande de direction (20), en provoquant ainsi l'orientation des roues (51) sur l'essieu orientable (50) en fonction du mouvement de l'actionneur de direction (40, 41) ;
le détecteur de direction (30) détectant le mouvement d'orientation de l'essieu orientable (50) et égalisant la pression de fluide appliquée au premier et second côtés de la commande de direction (20) quand un degré souhaité d'orientation de l'essieu orientable (50) a été atteint, afin d'éviter ainsi une orientation ultérieure de l'essieu orientable (50).

17. Procédé selon la revendication 16, comprenant l'étape consistant à faire fonctionner sélectivement les dispositifs de pressurisation de fluide (60), afin de réduire la pression dans les lignes de pressurisation de fluide (15), en évitant ainsi que lesdites roues (51) ne soient orientées lors du fonctionnement de l'actionneur de direction (40, 41).

18. Procédé selon la revendication 16 ou 17, dans lequel la commande de direction (20) comprend une vanne de commande proportionnelle (20).
